# EUROPÄISCHE PATENTSCHRIFT

(11) **EP 3 328 555 B1**
(45) Veröffentlichungstag und Bekanntmachung des Hinweises auf die Patenterteilung: **09.10.2019**
(21) Anmeldenummer: 16740986.1
(22) Anmeldetag: 11.07.2016
(51) Int. Cl.: B05B 15/00

(54) **VORRICHTUNG ZUM BEIDSEITIGEN BESCHICHTEN MINDESTENS EINER LAUFENDEN FLACHMATERIALBAHN**
DEVICE FOR COATING AT LEAST ONE RUNNING FLAT MATERIAL WEB ON BOTH SIDES
DISPOSITIF DE REVÊTEMENT DES DEUX FACES D'AU MOINS UN BANDE CONTINUE DE MATÉRIAU PLAT

(30) Priorität: 31.07.2015 DE 102015112659
(43) Veröffentlichungstag der Anmeldung: 06.06.2018
(73) Patentinhaber: Lindauer Dornier Gesellschaft mit beschränkter Haftung, 88131 Lindau (DE)
(72) Erfinder: RUTZ, Andreas, 88131 Lindau (DE); HERZ, Andreas, 87477 Sulzberg (DE)
(86) Internationale Anmeldenummer: PCT/EP2016/066397
(87) Internationale Veröffentlichungsnummer: WO 2017/021102

(56) Entgegenhaltungen:
- EP-A2- 0 182 747
- DE-B3-102012 217 682
- JP-A- H06 296 931
- US-A- 3 595 204
- US-B1- 6 174 372

## Beschreibung

Die vorliegende Erfindung betrifft eine Vorrichtung zum beidseitigen Beschichten mindestens einer laufenden Flachmaterialbahn. US6174372 zeigt ein gattungsgemäße Vorrichtung.

Zur Beschichtung und Verfestigung von Flachmaterialbahnen, beispielsweise flachen, nebeneinander laufenden Kohlenstofffasern bzw. Carbonfilamenten, sind Beschichtungsdüsen bekannt. Diese Beschichtungsdüsen, auch häufig als Pultrusionsdüsen bezeichnet, dienen zum Auftragen einer heißen Beschichtungsflüssigkeit, welche die Fasern benetzt und zwischen die Fasern fließt. Bei Weiterführen der Flachmaterialbahn durch einen Ofen kühlt die Beschichtungsflüssigkeit ab, wodurch die Fasern dauerhaft miteinander verkleben und somit ein verfestigtes Tape erhalten wird. Dieses kann dann aufgewickelt und in einem späteren Prozess zur Herstellung von Leichtbauteilen verwendet werden.

Die bekannten Beschichtungsdüsen weisen flexible, beheizbare Zuleitungen auf, die aus Kunststoff bestehen und durch welche geschmolzenes Beschichtungsmaterial geführt werden kann. Die Verwendung von flexiblen Zuleitungen ist erforderlich, um die Düse während der Produktion mit nur kurzen Stillstandzeiten öffnen und reinigen zu können, da es beim Imprägnieren immer wieder zum Aufstauchen von beschädigten Fasern kommt, die dann in der oder den Beschichtungsdüsen akkumulieren. Bei Verwendung von starren Leitungen ist ein einfaches Öffnen zum Zweck der Reinigung nicht möglich.

Die Kunststoff-Zuleitungen müssen einerseits hohe Drücke aushalten und andererseits idealerweise hohe Schmelze-Temperaturen. In beiderlei Hinsicht sind die Kunststoff-Zuleitungen jedoch nicht optimal. Beispielsweise halten sie in aller Regel lediglich einer Schmelze-Temperatur von bis zu 260 °C stand. Thermoplaste wie z.B. PA6, PET usw. mit höheren Schmelztemperaturen und erforderlichen Verarbeitungsdrücken sind damit nicht einsetzbar. Hinzu kommt noch, dass der die Schmelze führende Teil der flexiblen Zuleitung nicht glatt, sondern gewellt ist. Dies führt zu sehr unterschiedlichen Verweilzeiten der Schmelze in der Zuleitung, was einen starken thermischen Abbau von Teilen der Schmelze zur Folge hat.

Es ist Aufgabe der vorliegenden Erfindung, eine Beschichtungsvorrichtung zur Verfügung zu stellen, die eine einfache Beschichtung und insbesondere Wartung ermöglicht und zudem gewährleistet, dass Beschichtungsmaterial ohne wesentliche Einschränkungen hinsichtlich dessen Temperatur und Druck einer Flachmaterialbahn zugeführt werden kann.

Die Aufgabe wird gelöst durch eine Vorrichtung mit den Merkmalen des Patentanspruchs 1.

Die erfindungsgemäße Vorrichtung bietet zum einen den Vorteil, dass starre Zuleitungsabschnitte vorgesehen sind, welche wesentlich einfacher beheizbar sind als flexible Schläuche. So können starre Zuleitungsabschnitte insbesondere aus Metall, vorzugsweise aus Edelstahl, bestehen, die von außen mit Heizeinrichtungen umgeben werden, so dass das Beschichtungsmaterial mit Temperaturen von oberhalb 260 °C durch sie hindurch fließen kann. So sind ohne weiteres Temperaturen von über 400 °C zu erreichen. Unter dem Begriff "starr" wird vorliegend eine nicht-flexible, unbewegliche Ausgestaltung verstanden, die insbesondere nicht per Hand verbiegbar ist.

Die Erfindung ermöglicht somit, dass sehr hohe Verarbeitungstemperaturen von 300 °C und höher und hohe Verarbeitungsdrücke (ca. 200 bar) einsetzbar sind. Zudem ist eine Öffnungsbewegung der Beschichtungsdüsen in die Wartungsposition und eine Schließbewegung in deren Arbeitsposition möglich, ohne dass Halterungen oder Schrauben gelöst werden müssten.

Ein weiterer Vorteil besteht darin, dass zumindest eine der Beschichtungsdüsen, vorzugsweise beide, von einer Arbeits- in eine Wartungsposition überführt werden kann, wobei bei diesem Überführen ein erster starrer Leitungsabschnitt relativ zu einem zweiten starren Leitungsabschnitt bewegt wird, um den Durchfluss des Beschichtungsmaterials zu stoppen. Diese Ausgestaltung hat den Vorteil, dass die mindestens eine Beschichtungsdüse zusammen mit dem ersten Zuleitungsabschnitt bewegt wird, besonders bevorzugt ohne ein zusätzliches Gelenk o.ä. zwischen der Beschichtungsdüse und dem ersten Zuleitungsabschnitt. Mit anderen Worten wird der starr ausgebildete erste Zuleitungsabschnitt zusammen mit der zugehörigen Beschichtungsdüse relativ zum zweiten, starr ausgebildeten Zuleitungsabschnitt bewegt. Vorzugsweise reicht hierbei eine einzige Bewegung, nämlich eine Relativbewegung des ersten zum zweiten Zuleitungsabschnitt, sowohl zum Überführen der mindestens einen Beschichtungsdüse von der Arbeits- in die Wartungsposition als auch zum Unterbrechen des Flusses des Beschichtungsmaterials.

Vorzugsweise dichtet eine Wandung des ersten Zuleitungsabschnitts in der Wartungsposition der zugehörigen Beschichtungsdüse den im zweiten Zuleitungsabschnitt ausgebildeten Durchflusskanal für das Beschichtungsmaterial endseitig ab. Diese Abdichtfunktion wird vorteilhafterweise durch die Relativbewegung des ersten zum zweiten Zuleitungsabschnitt realisiert, besonders bevorzugt durch eine einzige Bewegung des ersten Zuleitungsabschnitts und der zugehörigen Beschichtungsdüse. Die Abdichtung erfolgt hierbei derart, dass kein Beschichtungsmaterial aus dem ansonsten offenen Ende des zweiten Durchflusskanals austreten kann, da die Wandung des ersten Zuleitungsabschnitts dieses Ende abdichtet. Der Vorteil liegt darin, dass in der Wartungsposition das Beschichtungsmaterial nicht in eine andere Leitung umgelenkt werden muss. Außerdem kann das Beschichtungsmaterial nicht unkontrolliert abtropfen, was eine Verletzungsgefahr darstellen würde.

Schließlich wird durch den hermetischen Verschluss der Zuleitung verhindert, dass das Polymer oxidativ abgebaut wird.

Wie oben ausgeführt ist es bevorzugt, wenn der besagte erste Zuleitungsabschnitt relativ zu der zugehörigen Beschichtungsdüse positionsunveränderlich ausgebildet ist. Mit anderen Worten bilden der erste Zuleitungsabschnitt und die zugehörige Beschichtungsdüse eine Einheit, die als Ganzes beim Überführen der Beschichtungsdüse von der Arbeitsposition in die Wartungsposition bewegt wird. Dieser Aufbau ist einfach und leicht handhabbar, verschafft aber gleichzeitig den Vorteil der leichten Zugänglichkeit zum Düsenschlitz der Beschichtungsdüse.

Beim Überführen der mindestens einen Beschichtungsdüse von der Arbeitsposition in die Wartungsposition und zurück wird vorzugsweise der zweite Zuleitungsabschnitt nicht mitbewegt. Bevorzugt bewegen sich bei dem genannten Überführen tatsächlich lediglich der erste Zuleitungsabschnitt und die zugehörige Beschichtungsdüse, vorzugsweise - entsprechend den obigen Ausführungen - mit einer einzigen Bewegung.

Besonders bevorzugt sind keine flexiblen Abschnitte zwischen der Bevorratungseinheit für das Beschichtungsmaterial und den Beschichtungsdüsen vorhanden. Mit anderen Worten sind alle das Beschichtungsmaterial führenden Zuleitungsabschnitte starr ausgebildet. Insbesondere sind hierbei auch zwischen den ersten und zweiten Zuleitungsabschnitten, die bevorzugt rotatorisch und/oder translatorisch zueinander bewegbar sind, keine flexibel ausgebildeten, d.h. nicht-starren Teile vorhanden.

Bevorzugt ist ein gemeinsamer Zuleitungsabschnitt für beide Beschichtungsdüsen vorgesehen. Durch diesen gemeinsamen Zuleitungsabschnitt wird Beschichtungsmaterial für beide Beschichtungsdüsen geleitet, von welchem dann zwei Zuleitungsabschnitte wegführen, wobei jeweils eine dieser Zuleitungsabschnitte zu jeweils einer Beschichtungsdüse führt. Diese beiden besagten Zuleitungsabschnitte sind vorzugsweise als erste Zuleitungsabschnitte ausgebildet, die - entsprechend dem Vorgesagten - bevorzugt eine starre Einheit mit der Beschichtungsdüse bilden. Auch der gemeinsame Zuleitungsabschnitt ist besonders bevorzugt starr ausgebildet. Bei einer entsprechenden Ausführung ist ein gemeinsamer starrer Zuleitungsabschnitt vorgesehen, von dem zwei starre zweite Zuleitungsabschnitte abzweigen, die dann in jeweils in einen ersten starren Zuleitungsabschnitt übergehen, wobei entsprechend der Erfindung die ersten und zweiten Zuleitungsabschnitte relativ zueinander bewegbar sind.

Der besagte gemeinsame Zuleitungsabschnitt ist gemäß einer vorteilhaften Ausführungsform zumindest teilweise identisch mit mindestens einem zweiten Zuleitungsabschnitt, vorzugsweise mit zwei zweiten Zuleitungsabschnitten, die jeweils mit einem ersten, zur jeweiligen Beschichtungsdüse führenden Zuleitungsabschnitt verbunden sind. Bei einer entsprechenden Ausgestaltung führt ein gemeinsamer starrer Zuleitungsabschnitt zu einem ersten starren Zuleitungsabschnitt, der relativ zum gemeinsamen Zuleitungsabschnitt bewegbar ausgebildet ist. In diesem Fall sind also der gemeinsame Zuleitungsabschnitt und der zweite Zuleitungsabschnitt - zumindest auf diesem Teilstück - identisch.

Gemäß einer vorteilhaften Ausgestaltung sind der erste und der zweite Zuleitungsabschnitt mindestens einer und vorzugsweise beider Beschichtungsdüsen jeweils mit einem Schubgelenk miteinander verbunden. Hierbei wird bevorzugt der erste gegenüber dem zweiten Zuleitungsabschnitt verschoben, beispielsweise linear oder in einer Bogenbewegung. Wird beispielsweise der erste Zuleitungsabschnitt zusammen mit der zugehörigen Beschichtungsdüse von der Flachmaterialbahn in einer Linearbewegung vom zweiten Zuleitungsabschnitt wegbewegt, ist der Düsenschlitz der Beschichtungsdüse in einfacher Weise zugänglich.

Die mindestens eine Beschichtungsdüse kann vorteilhafterweise insbesondere durch eine Linearbewegung von der Arbeits- in die Wartungsposition und durch eine entgegengesetzte Linearbewegung von der Wartungs- in die Arbeitsposition überführbar ausgestaltet sein. Hierbei wird auch der erste Zuleitungsabschnitt relativ zum zweiten Zuleitungsabschnitt linear verschoben. Der zweite Zuleitungsabschnitt bleibt vorzugsweise stationär bzw. ortsfest.

Gemäß einer alternativen Ausführungsform (die ggf. jedoch auch mit der vorbeschriebenen kombinierbar ist), sind der erste und der zweite Zuleitungsabschnitt mindestens einer und vorzugsweise beider Beschichtungsdüsen jeweils mittels eines Drehgelenks miteinander verbunden. Bei dieser Schwenk- bzw. Rotationsbewegung wird der erste Zuleitungsabschnitt relativ zum zweiten, hierbei bevorzugt ortsfest bleibenden Zuleitungsabschnitt bewegt und somit besonders bevorzugt auch die mindestens eine Beschichtungsdüse von der Arbeits- in die Wartungsposition und durch eine entgegengesetzte Rotationsbewegung von der Wartungs- in die Arbeitsposition überführt.

Bei einer diesbezüglich bevorzugten Ausführungsform sind die im ersten und zweiten Zuleitungsabschnitt ausgebildeten Durchflusskanäle in der Arbeitsposition der zugehörigen Beschichtungsdüse radial miteinander fluchtend in dem Drehgelenk ausgebildet. Bei einem Überführen dieser Beschichtungsdüse von der Arbeitsposition in die Wartungsposition wird der erste Zuleitungsabschnitt relativ zum zweiten Zuleitungsabschnitt in Umfangsrichtung des Drehgelenks rotatorisch verschoben, so dass der Durchfluss des Beschichtungsmaterials unterbrochen wird. Das freie Ende des zweiten Zuleitungsabschnitts, das in der Arbeitsposition der Beschichtungsdüse in ein freies Ende des ersten Zuleitungsabschnitts übergeht, wird hierbei in der Wartungsposition vorzugsweise durch eine konvexe Wandung des ersten Zuleitungsabschnitts abgedichtet.

Bei der vorgenannten Ausführungsform ist es bevorzugt, wenn der Durchflusskanal des zweiten Zuleitungsabschnitts in Durchflussrichtung radial von außen nach innen zum ersten Zuleitungsabschnitt geführt ist. Der innen liegende erste Zuleitungsabschnitt, der dann vorzugsweise vom zweiten Zuleitungsabschnitt umschlossen ist, dreht sich dann innerhalb dieses zweiten Zuleitungsabschnitts, während der letztere vorzugsweise ortsfest ist.

Eine vorteilhafte Ausgestaltung des ersten Zuleitungsabschnitts sieht vor, dass der darin vorgesehene Durchflusskanal zunächst, d.h. im Anschluss an den Übergang vom zweiten Zuleitungsabschnitt, in Durchflussrichtung radial in Bezug auf die Drehachse des Drehgelenks und nachfolgend in Axialrichtung des Drehgelenks, vorzugsweise die Längsachse einschließend, in Richtung der Beschichtungsdüse führt. Diese Ausgestaltung ist beispielsweise in einfacher Weise durch zwei senkrecht zueinander verlaufende und ineinander übergehende Bohrungen in dem vorzugsweise als Block ausgebildeten ersten Zuleitungsabschnitt realisierbar.

Bei einer vorteilhaften Ausgestaltung der erfindungsgemäßen Vorrichtung ist eine Kniehebeleinrichtung zum Überführen mindestens einer der Beschichtungsdüsen von der Arbeitsposition in die Wartungsposition vorgesehen. Der Hebelmechanismus des Kniehebels ermöglicht es, ein schnelles und kraftvolles Schließen (Überführen von der Wartungsposition in die Arbeitsposition) und Öffnen (Überführen von der Arbeitsposition in die Wartungsposition) ausführen zu können. Die Kniehebeleinrichtung ist vorzugsweise manuell und/oder pneumatisch oder hydraulisch betätigbar.

Besonders bevorzugt sind die beiden Beschichtungsdüsen in ihrer jeweiligen Arbeitsposition sich gegenüberliegend angeordnet, wobei die zu beschichtende Flachmaterialbahn zwischen den Düsenschlitzen läuft. Die beiden Beschichtungsdüsen sowie deren zugehöriger erster und zweiter Zuleitungsabschnitt können insbesondere symmetrisch (wobei die Symmetrieebene durch die Transportebene der Flachmaterialbahn definiert ist) und mittels gleicher Kinematik, beispielsweise einer vorgenannten Kniehebeleinrichtung mit zwei Kniehebeln, ausgebildet sein. Die obigen Ausführungen, insbesondere hinsichtlich der Dreh- oder Schubgelenke bzw. der Relativbewegungen von dem jeweiligen ersten zum jeweiligen zweiten Zuleitungsabschnitt, gelten dann besonders bevorzugt für beide Beschichtungsdüsen. Die beiden Beschichtungsdüsen können insbesondere gegenläufig zueinander aus ihrer jeweiligen Arbeitsposition in ihre Wartungsposition und zurück überführbar sein.

Die erfindungsgemäße Vorrichtung ist gemäß der vorangegangenen Beschreibung ausgebildet, wobei die genannten Merkmale einzeln oder in beliebiger Kombination vorhanden sein können.

Die Erfindung betrifft ebenfalls ein Verfahren zum Herstellen von Prepregs (preimpregnated fibres, vorimprägnierte Fasern) durch Beschichten einer faserhaltigen Flachmaterialbahn, insbesondere aus Glas- oder Carbonfilamenten, mittels der vorbeschriebenen Vorrichtung, wobei die Beschichtungsdüsen von einer Wartungsposition in eine Arbeitsposition überführt werden, um Beschichtungsmaterial auf eine laufende Flachmaterialbahn aufzutragen.

Weitere Vorteile der Erfindung sind in den nachfolgenden Ausführungsbeispielen beschrieben. Es zeigen:
- **Figur 1**: eine Seitenansicht einer erfindungsgemäßen Vorrichtung mit zwei in Arbeitsposition befindlichen Beschichtungsdüsen, die gegeneinander mittels einer Kniehebeleinrichtung verschwenkbar sind;
- **Figur 2**: eine Seitenansicht der Vorrichtung der Figur 1 in Wartungsposition;
- **Figur 3**: eine Seitenansicht der beiden Beschichtungsdüsen der Figuren 1 und 2, in Arbeitsstellung (um 90° gegenüber der Darstellung in Figur 1 gedreht);
- **Figur 4**: eine Draufsicht auf die beiden Beschichtungsdüsen der Figur 3, in Arbeitsstellung;
- **Figur 5**: eine Seitenansicht der beiden Beschichtungsdüsen der Figuren 3 und 4, in Wartungsstellung;
- **Figur 6**: eine Draufsicht auf die beiden Beschichtungsdüsen der Figuren 3 bis 5, in Wartungsstellung;
- **Figur 7**: eine geschnittene Seitenansicht einer Beschichtungsdüse der Figuren 3-6, in Arbeitsstellung;
- **Figur 8**: eine geschnittene Seitenansicht einer Beschichtungsdüse wie in Figur 7, allerdings in Wartungsstellung;
- **Figur 9**: eine Seitenansicht einer Vorrichtung mit zwei gegeneinander linear verschiebbaren, in Arbeitsstellung befindlichen Beschichtungsdüsen (gestrichelt dargestellt);
- **Figur 10**: eine Vorderansicht auf die Vorrichtung der Figur 9 (Beschichtungsdüsen nicht dargestellt);
- **Figur 11**: eine Seitenansicht der Vorrichtung der Figuren 8 und 9 mit in Wartungsstellung verschobenen Beschichtungsdüsen (gestrichelt dargestellt);
- **Figur 12**: eine Vorderansicht auf die Vorrichtung der Figur 11 (Beschichtungsdüsen nicht dargestellt);
- **Figur 13**: eine Hinteransicht einer alternativen Vorrichtung mit zwei gegeneinander linear verschiebbaren, in Arbeitsstellung befindlichen Beschichtungsdüsen (gestrichelt dargestellt);
- **Figur 14**: eine Seitenansicht der Vorrichtung der Figur 13 (Beschichtungsdüsen nicht dargestellt);
- **Figur 15**: eine Hinteransicht wie in Figur 13, allerdings mit linear gegeneinander verschobenen Zuleitungsabschnitten (Beschichtungsdüsen gestrichelt dargestellt), und
- **Figur 16**: eine Seitenansicht der Vorrichtung der Figur 15 (Beschichtungsdüsen nicht dargestellt);

Bei der nachfolgenden Beschreibung werden für gleiche Merkmale, die bei unterschiedlichen Ausführungsformen in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und/oder Wirkweise der vorstehend bereits beschriebenen Merkmale.

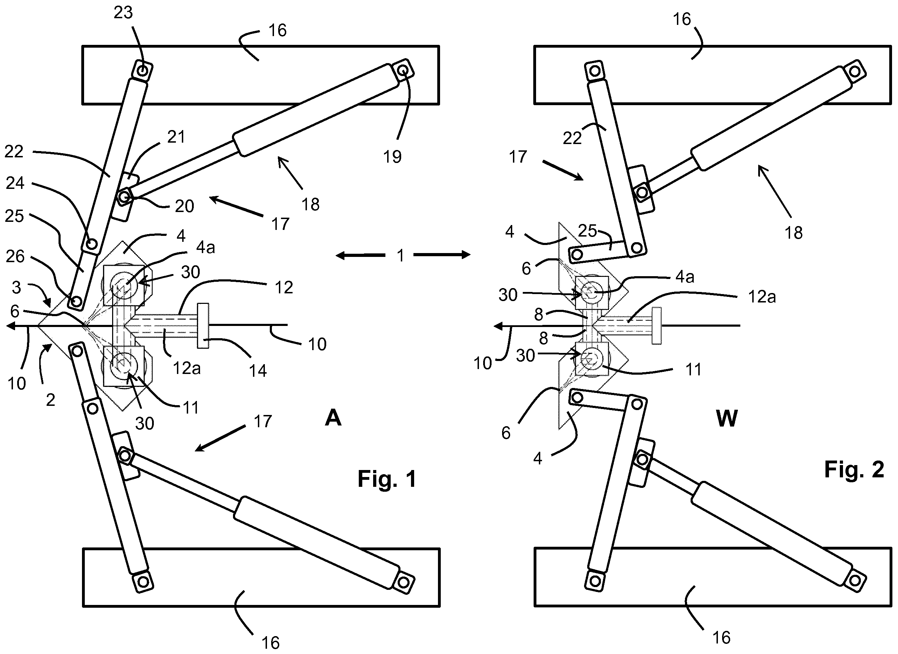

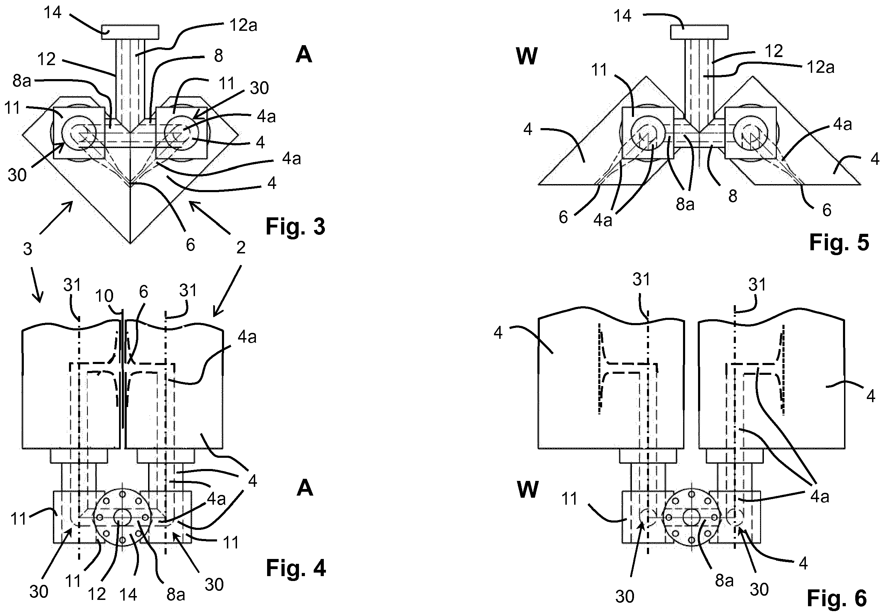

Die Figuren 1 und 2 zeigen in Seitenansicht eine Vorrichtung 1 mit zwei Beschichtungsdüsen 2, 3, die in den Figuren 3 bis 6 in Alleindarstellung wiedergegeben sind. Die Beschichtungsdüsen 2, 3 sind in der Figur 1 in einer Arbeitsstellung A dargestellt, in der sich ihre Düsenschlitze 6 gegenüberliegen und eine Flachmaterialbahn 10 zwischen ihnen hindurch geführt wird. Die Flachmaterialbahn 10 besteht beispielsweise aus parallel verlaufenden Carbonfilamenten, die miteinander verklebt werden sollen. Hierzu wird ein geschmolzenes Beschichtungsmaterial, beispielsweise ein Polyamid (z.B. PA6) oder Polyester (PET), mit einer Temperatur von ca. 300 °C und höher und hohem Verarbeitungsdruck (z.B. bei 200 bar) mittels der Beschichtungsdüsen 2, 3 auf die laufende Flachmaterialbahn 10 von deren beider Seiten aufgetragen. Nach Verlassen der Beschichtungsdüsen 2, 3 erkaltet das Beschichtungsmaterial und verfestigt hierbei die Flachmaterialbahn 10, welche dann zur Herstellung von insbesondere dreidimensionalen Werkstücken weiterverarbeitet werden kann.

Zum Zuführen des flüssigen Beschichtungsmaterials weist das Ausführungsbeispiel der Figuren 1-8 einen gemeinsamen Zuleitungsabschnitt 12 auf, der mittels eines Flansches 14 an einen vorgeordneten Zuleitungsabschnitt angeschlossen ist, der zu einer Bevorratungseinheit für das Beschichtungsmaterial führt (nicht dargestellt). Stromabwärtig zweigen vom gemeinsamen Zuleitungsabschnitt 12 zwei zweite Zuleitungsabschnitte 8 ab, die zusammen mit dem gemeinsamen Zuleitungsabschnitt 12 T-förmig ausgebildet sind. Am stromabwärtigen Ende jedes zweiten Zuleitungsabschnittes 8 ist ein erster Zuleitungsabschnitt 4 vorgesehen, wobei der jeweilige erste und zweite Zuleitungsabschnitt 4, 8 jeweils mittels eines Drehgelenks 30, das weiter unten beschrieben wird, miteinander verbunden sind. Der jeweilige erste Zuleitungsabschnitt 4 führt zu der Beschichtungsdüse 2 bzw. der Beschichtungsdüse 3, die jeweils einen Düsenschlitz 6 aufweisen, welcher der Flachmaterialbahn 10 in der Arbeitsposition A zugestellt werden kann.

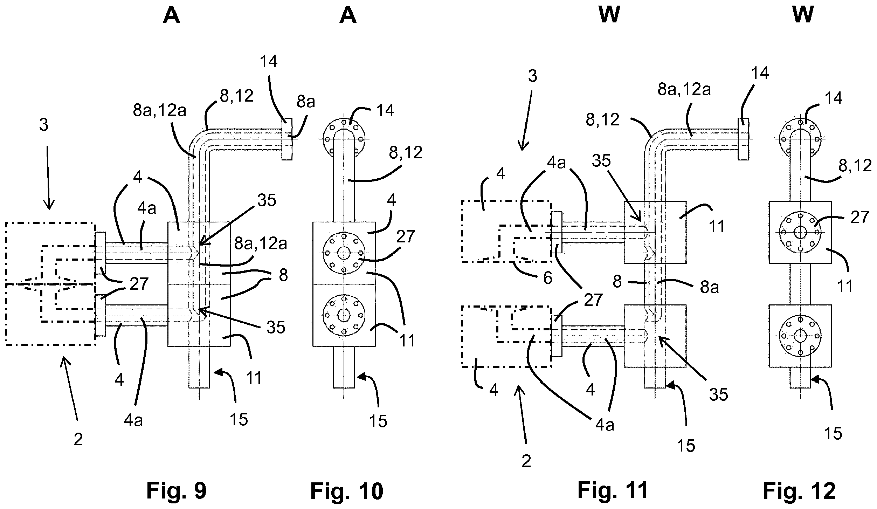

Die ersten und zweiten Zuleitungsabschnitte 4, 8 sowie auch der gemeinsame Zuleitungsabschnitt 12 sind starr, d.h. nicht flexibel, ausgebildet, vorzugsweise aus einem Metall und insbesondere aus Edelstahl. Sie weisen Durchflusskanäle 4a, 8a und 12a auf, die bei in Arbeitsstellung A verschwenkter Position einen von der Bevorratungseinheit bis zu den Düsenschlitzen 6 durchgehenden Fluss an Beschichtungsmaterial ermöglichen. Hierzu werden zumindest einige der Zuleitungsabschnitte 4, 8, 12 zumindest abschnittsweise mit Heizeinrichtungen, beispielsweise Heizdrähten, umgeben (nicht dargestellt). Die Zuleitungsabschnitte aus bevorzugt Edelstahl leiten die Wärme hervorragend, so dass das durch sie hindurchfließende Beschichtungsmaterial problemlos im geschmolzenen Zustand gehalten werden kann. Angemerkt sei, dass entsprechende Heizeinrichtungen auch bei den Vorrichtungen der übrigen Ausführungsbeispiele (Figuren 9 bis 12 und Figuren 13-16) vorgesehen sind.

Des Weiteren ist jeder der beiden ersten Zuleitungsabschnitte 4 starr mit der jeweiligen Beschichtungsdüse 2 bzw. 3 verbunden, beispielsweise durch Verschweißung oder Verschraubung, so dass nur eine gemeinsame Bewegung von jeweiligem ersten Zuleitungsabschnitt 4 und Beschichtungsdüse 2 bzw. 3 möglich ist. Die zweiten Zuleitungsabschnitte 8 hingegen bleiben stets in ihrer Position; nur der jeweilige erste Zuleitungsabschnitt 4 und die zugehörige Beschichtungsdüse 2 bzw. 3 werden beim Überführen von der Arbeitsposition A in die Wartungsposition W und zurück bewegt.

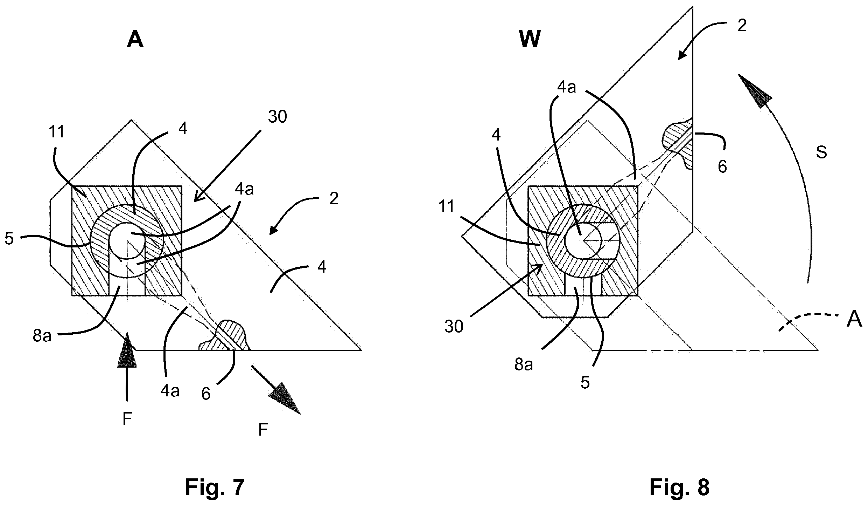

In der Arbeitsstellung A sind der jeweilige erste und zweite Zuleitungsabschnitt 4, 8 derart zueinander ausgerichtet, dass deren Durchflusskanäle 4a, 8a aneinander anschließen, um den Durchfluss des Beschichtungsmaterials zur jeweiligen Beschichtungsdüse 2, 3 zu ermöglichen. Hierzu ist gemäß dem vorliegenden Ausführungsbeispiel der Durchflusskanal 8a des zweiten Zuleitungsabschnitts 8 in Durchflussrichtung radial von außen nach innen zum ersten Zuleitungsabschnitt 4 geführt. Anschließend - in Durchflussrichtung gesehen - weist der Durchflusskanal 4a eine 90°-Krümmung auf und läuft in Axialrichtung des Durchflusskanals 4a, um dann - wiederum nach einer 90°-Krümmung - in dem Düsenschlitz 6 zu münden. In den Figuren 7 und 8 ist dieser Sachverhalt genauer in einer seitlichen Schnittansicht dargestellt. In der Figur 7 führt der Durchflusskanal 8a des zweiten Zuleitungsabschnitts 8 von unten in Radialrichtung des ersten Zuleitungsabschnitts 4 und geht durchgehend in dessen Durchflusskanal 4a über. Im Anschluss daran (senkrecht zur Bildebene der Figur 4) verläuft der Durchflusskanal 4a in Axialrichtung des ersten Zuleitungsabschnitts 4. Der Fluss des Beschichtungsmaterials ist mit Pfeilen F (Figur 7) gekennzeichnet.

In der Figur 8 sind der erste Zuleitungsabschnitt 4 und die Beschichtungsdüse 2 um 90° gegenüber der Arbeitsposition A in die Wartungsposition W verschwenkt dargestellt, s. Pfeil S in der Figur 8. Bei diesem Verschwenken dichtet die konvexe Wandung 5 des ersten Zuleitungsabschnitts 4 das freie bzw. offene Ende des Durchflusskanals 8a des zweiten Zuleitungsabschnitts 8 ab. Hierbei gleitet die konvexe Wandung 5 des ersten Zuleitungsabschnitts 4 entlang dem offenen Ende des Durchflusskanals 8a, bis dieser von der besagten konvexen Wandung 5 verschlossen ist. Somit wird der Fluss des Beschichtungsmaterials durch das Überführen der Beschichtungsdüse 2 bzw. 3 von der Arbeitsposition A in die Wartungsposition W gestoppt - und bei der entsprechenden Umkehrbewegung wieder freigegeben.

Wie oben angedeutet, sind die beiden Beschichtungsdüsen 2, 3 jeweils mittels eines Drehgelenks 30 um jeweils eine Schwenkachse 31 verschwenkbar ausgebildet (s. Figuren 4 und 6), so dass die Beschichtungsdüsen 2, 3 von einer Arbeitsstellung A (Figuren 1, 3, 4, 7) in eine Wartungsstellung W (Figuren 2, 5, 6, 8) und zurück verschwenkbar sind. Hierzu sind die ersten Zuleitungsabschnitte 4 in je einem ortsfesten Lagerelement 11 drehbar gelagert (s. Figuren 4, 6, 7, 8). Der Schenkwinkel beträgt für jede Beschichtungsdüse 2, 3 vorzugsweise 90°, so dass der gesamte Winkel zwischen den beiden Beschichtungsdüsen 2, 3 im aufgeschwenkten Zustand (s. Figur 5) 180° beträgt. Wie insbesondere den Figuren 2 und 5 zu entnehmen ist, sind die beiden Düsenschlitze 6 bei in Wartungsposition W verschwenkten Beschichtungsdüsen 2, 3 ohne weiteres bequem zugänglich, um beispielsweise aufgestauchte Fasern bzw. Filamentbruchstücke aus ihnen zu entfernen.

Um die genannte Schwenkbewegung zu realisieren, ist eine Kniehebeleinrichtung 17 vorgesehen, die vorliegend pro Beschichtungsdüse 2 bzw. 3 eine Kniehebelmechanik vorsieht. Hierzu ist an einem Gestell 16 jeweils eine Teleskopfeder 18 an einem Gelenk 19 schwenkbar angelenkt. Die Teleskopfeder 18 kann manuell und/oder pneumatisch oder hydraulisch betätigt werden. Das andere Ende der Teleskopfeder 18 ist an einem Ansatzstück 21 mittels eines Gelenks 20 schwenkbar angelenkt. Das Ansatzstück 21 ist mit einer Stange 22 verbunden, deren eines Ende ebenfalls an dem Gestell 16 mittels eines Gelenks 23 und deren anderes Ende mittels eines Gelenks 24 an einer weiteren Stange 25 schwenkbar angelenkt ist. Diese Stange 25 wiederum ist mittels eines Gelenks 26 schwenkbar an der Beschichtungsdüse 3 (Analoges gilt für die Beschichtungsdüse 2) angelenkt. In der Figur 1 befindet sich die Teleskopfeder 18 im ausgefahrenen Zustand, wobei der Kniehebel die Beschichtungsdüse 3 (bzw. 2) in die Arbeitsstellung A presst. Wird die Teleskopfeder 18 in die eingefahrene Stellung überführt (Figur 2), schwenkt die zugehörige Beschichtungsdüse 3 bzw. 2 einschließlich des jeweiligen ersten Zuleitungsabschnitts 4 durch das Einknicken der Stange 25 relativ zur Stange 22 in die Wartungsposition W. Diese Bewegung ist durch Ausfahren der Teleskopfeder 18 reversibel.

Wie zudem den Figuren 1 und 2 zu entnehmen ist, können die beiden Kniehebelmechanismen unabhängig voneinander arbeiten, so dass auch nur eine der beiden Beschichtungsdüsen 2 oder 3 verschwenkt wird (beispielsweise in die Wartungsposition W zum Reinigen des Düsenschlitzes 6), während die andere Beschichtungsdüse 3 oder 2 in ihrer momentanen Position verbleibt.

In den Figuren 9 bis 12 ist eine alternative Ausführungsform für die Realisierung einer Relativbewegung von erstem und zweitem Zuleitungsabschnitt 4, 8 dargestellt. Statt eines Drehgelenks 30 (Figuren 1 bis 8) ist ein Schubgelenk 35 vorgesehen, mit dem der erste Zuleitungsabschnitt 4 und damit auch die mittels je eines Flansches 27 an ihm befestigte Beschichtungsdüse 2 bzw. 3 (der besseren Übersichtlichkeit halber nur in den Figuren 9, 11, 13 und 15 gestrichelt dargestellt) linear verschoben werden können, um sie von einer Arbeitsposition A (Figuren 9 und 10) in eine Wartungsposition W (Figuren 11 und 12) zu überführen. Hierzu ist jeweils eines der beiden Zuleitungsabschnitte 4, 8 abschnittsweise in je einem von zwei Gleit-Lagerelementen 11 ausgebildet, die jeweils zwei zueinander senkrechte Bohrungen aufweisen. Die eine Bohrung bildet einen Teil des Durchflusskanals 4a des ersten Zuleitungsabschnitts 4 aus, während die andere senkrecht zu der erstgenannten verläuft und einen Teil des Durchflusskanals 8a des zweiten Zuleitungsabschnitts 8 ausbildet. Die beiden Lagerelemente 11 sind somit auch Teil der jeweiligen ersten Zuleitungsabschnitte 4 und Teil der jeweiligen zweiten Zuleitungsabschnitte 8.

In der Wartungsposition W sind die beiden Beschichtungsdüsen 2, 3 relativ weit voneinander beabstandet, so dass sie von der Unterseite bzw. der Seite der Düsenschlitze 6 relativ leicht zugänglich sind. In der Arbeitsposition A bilden die beiden Beschichtungsdüsen 2, 3 einen dünnen Spalt zwischen sich aus, zwischen denen die Flachmaterialbahn 10 hindurchgeführt wird (in den Figuren 9 bis 10 nicht dargestellt; die Durchlaufrichtung der Flachmaterialbahn verläuft in die Bildebene der Figuren 9 und 11 hinein).

In der Seitenansicht der Figur 9 und der Vorderansicht der Figur 10 ist ein gemeinsamer Zuleitungsabschnitt 12 wiedergegeben, der mittels eines Flansches 14 mit einer Bevorratungseinheit (wiederum nicht dargestellt) verbindbar ist. Der gemeinsame Zuleitungsabschnitt 12 trägt diesen Namen, weil er Beschichtungsmaterial zu beiden Beschichtungsdüsen 2, 3 zuführt. Im gezeigten Ausführungsbeispiel ist der gemeinsame Zuleitungsabschnitt 12 auch Teil des zweiten Zuleitungsabschnitts 8, gegenüber dem die (in den Figuren 9 bis 12 obere) zweite Beschichtungsdüse 3 verschiebbar angeordnet ist. In der Verlängerung dieses gemeinsamen Zuleitungsabschnitts 12 geht dieser, nach Passieren des oberen Schubgelenks 35 für die zweite Beschichtungsdüse 3, in einen alleinigen zweiten Zuleitungsabschnitt 8 über, der zu dem unteren Schubgelenk 35 für die erste Beschichtungsdüse 2 führt. Der gesamte zweite Zuleitungsabschnitt 8 vom Flansch 14 bis zu seinem auch das untere Schubgelenk 35 passierenden freien Ende ist als starres Rohr 15 ausgebildet, entlang dem die beiden starren ersten Zuleitungsabschnitte 4 und die mit ihr starr verbundenen Beschichtungsdüsen 2, 3 linear verschiebbar angeordnet sind.

Das freie Ende der jeweiligen ersten Zuleitungsabschnitte 4 dichtet je eine Öffnung in den zweiten Zuleitungsabschnitten 8 ab, um einen Durchfluss durch deren Durchflusskanäle 4a, 8a zur jeweiligen Beschichtungsdüse 2, 3 in der Arbeitsposition A zu ermöglichen (Figuren 9 und 10). Beim Verschieben der Beschichtungsdüsen 2, 3 nach unten bzw. nach oben werden die beiden Öffnungen der zweiten Zuleitungsabschnitte 8 durch die Wandungen der zum Rohr 15 parallel laufenden Bohrung in den Lagerelementen 11 abgedichtet. Die offenen zu dem Rohr 15 weisenden Enden der Durchflusskanäle 4a werden hingegen durch die Wandung des Rohrs 15 abgedichtet, so dass ein Rückfluss des Beschichtungsmaterials unterbunden wird.

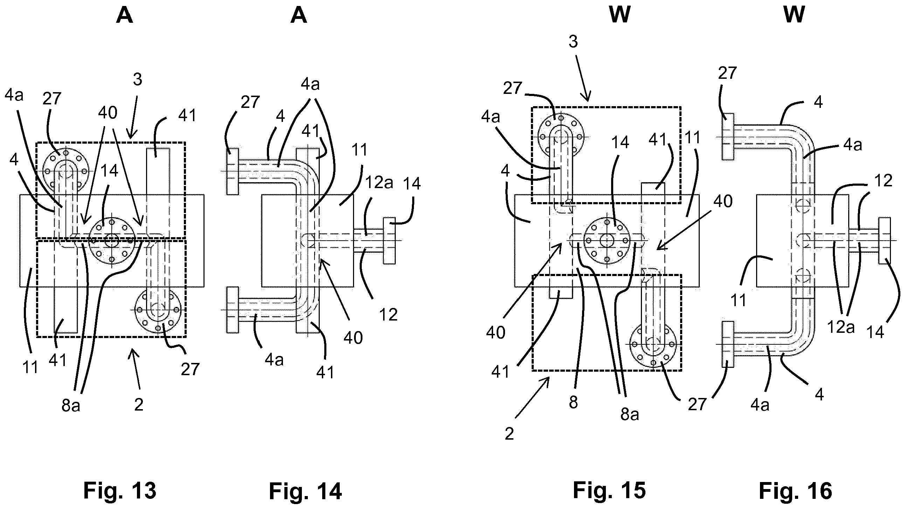

In den Figuren 13 bis 16 ist eine weitere Variante einer linear verschiebbaren Anordnung der ersten Zuleitungsabschnitte 4 sowie der starr mit diesen verbundenen Beschichtungsdüsen 2 bzw. 3 (nur in den Figuren 13 und 15 und auch dort nur in gestrichelten Linien wiedergegeben) einerseits und der zweiten Zuleitungsabschnitte 8 andererseits dargestellt. Die entsprechenden Schubgelenke 40 dieser Ausführungsform sind ähnlich zu den Schubgelenken 35 gemäß der Figuren 9 bis 12 ausgebildet.

Entsprechend dem Ausführungsbeispiel der Figuren 13 bis 16 ist ein gemeinsamer Zuleitungsabschnitt 12, der mittels eines Flansches 14 an eine stromaufwärtig angeordnete Bevorratungseinheit (nicht dargestellt) - ggf. über weitere zwischengeschaltete Zuleitungsabschnitte - angeschlossen ist, vorgesehen, von dem zwei kurze zweite Zuleitungsabschnitte 8 in entgegengesetzte Richtungen abzweigen. An deren Enden stoßen sie - in der Arbeitsposition Ader Beschichtungsdüsen 2, 4 - an die freien Enden von ersten Zuleitungsabschnitten 4, die in einem Winkel von 90° in entgegengesetzte Richtungen zu den Beschichtungsdüsen 2, 3 laufen. Die ersten Zuleitungsabschnitte 4 und die Beschichtungsdüsen 2, 3 sind wiederum mit Flanschen 27 miteinander verbunden.

Die beiden ersten Zuleitungsabschnitte 4 sind wiederum in einem blockartigen Lagerelement 11 geführt, wobei jeder erste Zuleitungsabschnitt 4 ein mit ihm einstückig verbundenes zylindrisches Verlängerungsstück 41 ohne Bohrung aufweist, das sich in der dem jeweiligen Flansch 27 abgewandten Richtung erstreckt. Diese Verlängerungsstücke 41 dichten in der Wartungsposition W (Figuren 15 und 16) die freien offenen Enden der zweiten Zuleitungsabschnitte 8 ab. In der Arbeitsposition A (Figuren 13 und 14) hingegen ermöglichen die Durchflusskanäle 4a, 8a wiederum einen durchgehenden Fluss des Beschichtungsmaterials zu den beiden Beschichtungsdüsen 2, 3. Hierzu ist jeder Durchflusskanal 4a zunächst durch eine parallel zum Durchflusskanal 8a verlaufende Bohrung in dem Lagerelement 11 gebildet, welche in einen senkrecht dazu verlaufenden Zuleitungsabschnitt 4a übergeht, der auf seinem Weg zur Beschichtungsdüse 2 bzw. 3 noch einmal um 90° abgewinkelt ist, bis er im jeweiligen Flansch 27 endet.

Sämtliche Passungen in dem Bereich der zueinander drehenden oder schiebenden Teile sind so eng und mit einer solch glatten Oberflächenqualität gestaltet, dass aufgrund der engen Spalte bei der gegebenen Viskosität der Schmelze eine Abdichtung gewährleistet ist.

Zum Ausführungsbeispiel der Figuren 13 bis 16 ist zu erwähnen, dass Teile der Zuleitungsabschnitte 4, 8 und 12 in dem Lagerelement 11 ausgebildet sind.

Die Erfindung ermöglicht es, Prepregs durch Beschichten einer faserhaltigen Flachmaterialbahn 10, insbesondere aus Glas- oder Carbonfilamenten, mittels einer der vorbeschriebenen Vorrichtungen herzustellen, wobei die Beschichtungsdüsen von der Wartungsposition W in eine Arbeitsposition A überführt werden, um Beschichtungsmaterial auf die laufende Flachmaterialbahn 10 aufzutragen.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind. Beispielsweise ist es möglich, zwei oder mehr Flachmaterialbahnen gleichzeitig zu beschichten, indem zwei oder mehr solcher Flachmaterialbahnen nebeneinander die erfindungsgemäße Vorrichtung durchlaufen.

### Bezugszeichenliste

- 1: Vorrichtung
- 2: erste Beschichtungsdüse
- 3: zweite Beschichtungsdüse
- 4: erster Zuleitungsabschnitt
- 4a: Durchflusskanal
- 5: konvexe Wandung
- 6: Düsenschlitz
- 8: zweiter Zuleitungsabschnitt
- 8a: Durchflusskanal
- 10: Flachmaterialbahn
- 11: Lagerelement
- 12: gemeinsamer Zuleitungsabschnitt
- 12a: gemeinsamer Durchflusskanal
- 14: Flansch
- 15: Rohr
- 16: Gestell
- 17: Kniehebeleinrichtung
- 18: Teleskopfeder
- 19: Gelenk
- 20: Gelenk
- 21: Ansatzstück
- 22: Stange
- 23: Gelenk
- 24: Gelenk
- 25: Stange
- 26: Gelenk
- 27: Flansch
- 30: Drehgelenk
- 31: Schwenkachse
- 35: Schubgelenk
- 40: Schubgelenk
- 41: Verlängerungsstück

- A: Arbeitsposition
- W: Wartungsposition
- F: Fluss des Beschichtungsmaterials
- S: Schwenkbewegung

## Patentansprüche

1. Vorrichtung zum beidseitigen Beschichten mindestens einer laufenden Flachmaterialbahn (10),
- mit einer ersten und einer zweiten Beschichtungsdüse (2, 3),
wobei die erste Beschichtungsdüse (2) der ersten Seite der Flachmaterialbahn (10) und die zweite Beschichtungsdüse (3) der zweiten Seite der Flachmaterialbahn (10) zustellbar ist, um die jeweilige Seite der Flachmaterialbahn (10) zu beschichten, und
wobei zumindest eine, vorzugsweise beide, Beschichtungsdüsen (2, 3) von einer Arbeits- in eine Wartungsposition (A, W) und zurück überführbar sind, sowie
- mit Zuleitungsabschnitten (4, 8) mit in ihnen ausgebildeten und in der Arbeitsposition (A) miteinander verbundenen, einen Durchfluss gewährleistenden Durchflusskanälen (4a, 8a) zum Zuführen eines heißen, flüssigen Beschichtungsmaterials zu der jeweiligen Beschichtungsdüse (2, 3),
**dadurch gekennzeichnet, dass** durch das Überführen mindestens einer der besagten Beschichtungsdüsen (2, 3) von der Arbeits- in die Wartungsposition (A, W) automatisch ein erster starrer und ein zweiter starrer Zuleitungsabschnitt (4, 8), die in der Arbeitsposition (A) einen Durchfluss des Beschichtungsmaterials zur Beschichtungsdüse (2, 3) ermöglichen, relativ zueinander derart bewegt werden, dass die in ihnen ausgebildeten Durchflusskanäle (4a, 8a) relativ zueinander bewegt werden, um den Durchfluss des Beschichtungsmaterials zu dieser Beschichtungsdüse (2, 3) zu unterbrechen.

2. Vorrichtung nach Anspruch 1, **dadurch gekennzeichnet, dass** der im zweiten Zuleitungsabschnitt (8) ausgebildete Durchflusskanal (8a) für das Beschichtungsmaterial beim Überführen der zugehörigen Beschichtungsdüse von der Arbeits- in die Wartungsposition (A, W) endseitig durch eine Wandung des ersten Zuleitungsabschnitts (4) abgedichtet wird.

3. Vorrichtung nach einem der Ansprüche 1 oder 2, **dadurch gekennzeichnet, dass** der besagte erste Zuleitungsabschnitt (4) relativ zur zugehörigen Beschichtungsdüse (2, 3) positionsunveränderlich ausgebildet ist und beim Überführen dieser Beschichtungsdüse (2, 3) von der Arbeitsposition (A) in die Wartungsposition (W) mitbewegt wird.

4. Vorrichtung nach einem der Ansprüche 1 oder 2, **dadurch gekennzeichnet, dass** der besagte zweite Zuleitungsabschnitt (8) derart ausgebildet ist, dass er beim Überführen einer oder beider Beschichtungsdüsen (2, 3) von der Arbeitsposition (A) in die Wartungsposition (W) und zurück nicht mitbewegt wird.

5. Vorrichtung nach einem der Ansprüche 1 oder 2, **dadurch gekennzeichnet, dass** alle von einer Bevorratungseinheit für das Beschichtungsmaterial zu den Beschichtungsdüsen (2, 3) führenden Zuleitungsabschnitte (4, 8, 12) starr ausgebildet sind.

6. Vorrichtung nach einem der Ansprüche 1 oder 2, **dadurch gekennzeichnet, dass** ein gemeinsamer Zuleitungsabschnitt (12) für beide Beschichtungsdüsen (2, 3) vorgesehen ist, von dem zwei Zuleitungsabschnitte (8) wegführen, wobei jeweils einer dieser Zuleitungsabschnitte (8) zu jeweils einer Beschichtungsdüse (2, 3) führt.

7. Vorrichtung nach Anspruch 6, **dadurch gekennzeichnet, dass** der gemeinsame Zuleitungsabschnitt (12) und mindestens ein zweiter Zuleitungsabschnitt (8), zumindest teilweise, identisch sind.

8. Vorrichtung nach einem der Ansprüche 1 oder 2, **dadurch gekennzeichnet, dass** der erste und der zweite Zuleitungsabschnitt (4, 8) über ein Drehgelenk (30) miteinander verbunden sind.

9. Vorrichtung nach Anspruch 8, **dadurch gekennzeichnet, dass** die mindestens eine Beschichtungsdüse (2, 3) durch eine Rotationsbewegung von der Arbeits- in die Wartungsposition (A, W) und durch eine entgegengesetzte Rotationsbewegung von der Wartungs- in die Arbeitsposition (W, A) überführbar ist, wobei auch der erste Zuleitungsabschnitt (4) relativ zum zweiten Zuleitungsabschnitt (8) rotatorisch bewegt wird.

10. Vorrichtung nach Anspruch 9, **dadurch gekennzeichnet, dass** die im ersten und zweiten Zuleitungsabschnitt (4, 8) ausgebildeten Durchflusskanäle (4a, 8a) für das Beschichtungsmaterial in der Arbeitsposition (A) der mindestens einen Beschichtungsdüse (2, 3) radial miteinander fluchtend ausgebildet sind und dass beim Überführen der zugehörigen Beschichtungsdüse (2, 3) von der Arbeitsposition (A) in die Wartungsposition (W) der erste und der zweite Zuleitungsabschnitt (4, 8) in Umfangsrichtung des Drehgelenks (30) gegeneinander bewegt werden.

11. Vorrichtung nach Anspruch 10, **dadurch gekennzeichnet, dass** der Durchflusskanal (8a) des zweiten Zuleitungsabschnitts (8) in Durchflussrichtung radial von außen nach innen zum ersten Zuleitungsabschnitt (4) geführt ist.

12. Vorrichtung nach Anspruch 11, **dadurch gekennzeichnet, dass** der Durchflusskanal (4a) im ersten Zuleitungsabschnitt (4) in Durchflussrichtung radial in Bezug auf die Drehachse (31) des Drehgelenks (30) und dann in Axialrichtung zur Beschichtungsdüse (2, 3) führt.

13. Vorrichtung nach einem der Ansprüche 1 oder 2, **dadurch gekennzeichnet, dass** eine Kniehebeleinrichtung (17), vorzugsweise manuell betätigbar und/oder pneumatisch oder hydraulisch unterstützt, zum Überführen mindestens einer der Beschichtungsdüsen (2, 3) von der Arbeitsposition (A) in die Wartungsposition (W) vorgesehen ist.

14. Vorrichtung nach einem der Ansprüche 1 oder 2, **dadurch gekennzeichnet, dass** der erste und der zweite Zuleitungsabschnitt (4, 8) über ein Schubgelenk (35; 40) miteinander verbunden sind.

15. Vorrichtung nach Anspruch 14, **dadurch gekennzeichnet, dass** mindestens eine Beschichtungsdüse (2, 3) durch eine Linearbewegung von der Arbeits- in die Wartungsposition (A, W) und durch eine entgegengesetzte Linearbewegung von der Wartungs- in die Arbeitsposition (W, A) überführbar ist, wobei auch der erste Zuleitungsabschnitt (4) relativ zum zweiten Zuleitungsabschnitt (8) linear verschoben wird.

16. Vorrichtung nach Anspruch 1 oder 2, **dadurch gekennzeichnet, dass** die beiden Beschichtungsdüsen (2, 3) in ihrer jeweiligen Arbeitsposition (A) sich gegenüberliegend angeordnet sind.

17. Vorrichtung nach einem der Ansprüche 1 oder 2, **dadurch gekennzeichnet, dass** die beiden Beschichtungsdüsen (2, 3) gegenläufig zueinander aus ihrer jeweiligen Arbeitsposition (A) in ihre Wartungsposition (W) und zurück überführbar sind.

18. Verfahren zum Herstellen von Prepregs durch Beschichten einer faserhaltigen Flachmaterialbahn (10), insbesondere aus Glas- oder Carbonfilamenten, mittels einer Vorrichtung (1) nach mindestens einem der Ansprüche 1 oder 2, wobei die Beschichtungsdüsen (2, 3) von einer Wartungsposition (W) in eine Arbeitsposition (A) überführt werden, um Beschichtungsmaterial auf eine laufende Flachmaterialbahn (10) aufzutragen.

## Claims

1. Apparatus for the two-sided coating of at least one running flat material web (10),
- with a first and a second coating nozzle (2, 3),
wherein the first coating nozzle (2) is providable to the first side of the flat material web (10) and the second coating nozzle (3) is providable to the second side of the flat material web (10), in order to coat the respective side of the flat material web (10), and
wherein at least one, preferably both, coating nozzles (2, 3) are transferable from a working position into a maintenance position (A, W) and back, as well as
- with supply line sections (4, 8) with throughflow channels (4a, 8a) that are embodied therein and that are connected with one another in the working position (A) and that ensure a throughflow for supplying a hot, liquid coating material to the respective coating nozzle (2, 3),
**characterized in that**,
during the transferring of at least one of the said coating nozzles (2, 3) from the working position into the maintenance position (A, W), a first rigid supply line section and a second rigid supply line section (4, 8), which in the working position (A) enable a throughflow of the coating material to the coating nozzle (2, 3), are automatically moved relative to one another in such a manner so that the throughflow channels (4a, 8a) embodied in them are moved relative to one another in order to interrupt the throughflow of the coating material to this coating nozzle (2, 3).

2. Apparatus according to claim 1, **characterized in that** the throughflow channel (8a) for the coating material embodied in the second supply line section (8), during the transferring of the associated coating nozzle from the working position into the maintenance position (A, W), is sealed on an end-side by a wall of the first supply line section (4).

3. Apparatus according to one of the claims 1 or 2, **characterized in that** the said first supply line section (4) is embodied with an invariable position relative to the associated coating nozzle (2, 3), and is moved along with it during the transferring of this coating nozzle (2, 3) from the working position (A) into the maintenance position (W).

4. Apparatus according to one of the claims 1 or 2, **characterized in that** the said second supply line section (8) is embodied in such a manner so that it is not also moved along during the transferring of one or both coating nozzles (2, 3) from the working position (A) into the maintenance position (W) and back.

5. Apparatus according to one of the claims 1 or 2, **characterized in that** all supply line sections (4, 8, 12) leading from a supply unit for the coating material to the coating nozzles (2, 3) are embodied rigid.

6. Apparatus according to one of the claims 1 or 2, **characterized in that** a common supply line section (12) is provided for both coating nozzles (2, 3), from which two supply line sections (8) lead away, wherein respectively one of these supply line sections (8) leads to respectively one coating nozzle (2, 3).

7. Apparatus according to claim 6, **characterized in that** the common supply line section (12) and at least one second supply line section (8) are at least partially identical.

8. Apparatus according to one of the claims 1 or 2, **characterized in that** the first and the second supply line section (4, 8) are connected with one another via a rotation joint (30).

9. Apparatus according to claim 8, **characterized in that** the at least one coating nozzle (2, 3) is transferable by a rotation motion from the working position into the maintenance position (A, W) and is transferable by an opposite rotation motion from the maintenance position into the working position (W, A), wherein also the first supply line section (4) is rotationally moved relative to the second supply line section (8).

10. Apparatus according to claim 9, **characterized in that** the throughflow channels (4a, 8a) for the coating material embodied in the first and second supply line section (4, 8) are embodied radially aligned with one another in the working position (A) of the at least one coating nozzle (2, 3), and **in that** during the transferring of the associated coating nozzle (2, 3) from the working position (A) into the maintenance position (W), the first and the second supply line section (4, 8) are moved opposite one another in the circumferential direction of the rotation joint (30).

11. Apparatus according to claim 10, **characterized in that** the throughflow channel (8a) of the second supply line section (8) is led in the throughflow direction radially from the outside toward the inside to the first supply line section (4).

12. Apparatus according to claim 11, **characterized in that** the throughflow channel (4a) in the first supply line section (4) is led in the throughflow direction radially with respect to the rotation axis (31) of the rotation joint (30) and then in the axial direction to the coating nozzle (2, 3).

13. Apparatus according to one of the claims 1 or 2, **characterized in that**, there is provided a toggle lever device (17), preferably manually operable and/or pneumatically or hydraulically assisted, for transferring at least one of the coating nozzles (2, 3) from the working position (A) into the maintenance position (W).

14. Apparatus according to one of the claims 1 or 2, **characterized in that** the first and the second supply line section (4, 8) are connected with one another via a thrust joint (35; 40).

15. Apparatus according to claim 14, **characterized in that** at least one coating nozzle (2, 3) is transferable by a linear motion from the working position into the maintenance position (A, W) and is transferable by an opposite linear motion from the maintenance position into the working position (W, A), wherein also the first supply line section (4) is linearly slidingly displaced relative to the second supply line section (8).

16. Apparatus according to claim 1 or 2, **characterized in that** both coating nozzles (2, 3) are arranged lying opposite one another in their respective working position (A) .

17. Apparatus according to one of the claims 1 or 2, **characterized in that** both coating nozzles (2, 3) are transferable opposite one another from their respective working position (A) into their maintenance position (W) and back.

18. Method for producing a prepreg by coating a fiber-containing flat material web (10), especially of glass or carbon filaments, by means of an apparatus (1) according to at least one of the claims 1 or 2, wherein the coating nozzles (2, 3) are transferred from a maintenance position (W) into a working position (A) in order to apply coating material onto a running flat material web (10).

## Revendications

1. Dispositif pour revêtir sur les deux faces au moins une bande de matériau plat (10) en défilement,
- avec une première et une seconde buse de revêtement (2, 3),
dans lequel la première buse de revêtement (2) peut être amenée sur le premier côté de la bande de matériau plat (10) et la seconde buse de revêtement (3) peut être amenée sur le second côté de la bande de matériau plat (10) pour revêtir le côté respectif de la bande de matériau plat (10),
et dans lequel au moins une, de préférence les deux buses de revêtement (2, 3) peuvent être transférées d'une position de travail vers une position de maintenance (A, W) et inversement, ainsi que
- avec des tronçons (4, 8) de conduite d'alimentation avec des canaux d'écoulement (4a, 8a) qui y sont formés et reliés les uns aux autres dans la position de travail (A), qui garantissent un écoulement pour acheminer une matière de revêtement chaude et liquide à la buse de revêtement (2, 3) respective,
**caractérisé en ce que** par le transfert de l'une au moins desdites buses de revêtement (2, 3) de la position de travail dans la position de maintenance (A, W), un premier tronçon rigide et un second tronçon rigide (4, 8) de conduite d'alimentation, qui, dans la position de travail (A), permettent un écoulement du matériau de revêtement vers la buse de revêtement (2, 3), sont déplacées l'un par rapport à l'autre de sorte que les canaux d'écoulement (4a, 8a) formés en eux soient déplacés l'un par rapport à l'autre pour interrompre l'écoulement du matériau de revêtement vers cette buse de revêtement (2, 3).

2. Dispositif selon la revendication 1, **caractérisé en ce que** le canal d'écoulement (8a) formé dans le second tronçon (8) de conduite d'alimentation pour le matériau de revêtement est obturé en son extrémité par une paroi du premier tronçon (4) de conduite d'alimentation lors du transfert de la buse de revêtement associée de la position de travail vers la position de maintenance (A, W).

3. Dispositif selon l'une des revendications 1 ou 2, **caractérisé en ce que** ledit premier tronçon (4) de conduite d'alimentation se présente sous une forme invariable en position par rapport à la buse de revêtement (2, 3) associée et est déplacée conjointement lors du transfert de cette buse de revêtement (2, 3) de la position de travail (A) dans la position de maintenance (W).

4. Dispositif selon l'une des revendications 1 ou 2, **caractérisé en ce que** ledit second tronçon (8) de conduite d'alimentation se présente sous une forme telle qu'il ne soit pas conjointement déplacé lors du transfert de l'une ou des deux buses de revêtement (2, 3) de la position de travail (A) vers la position de maintenance (W) et inversement.

5. Dispositif selon l'une des revendications 1 ou 2, **caractérisé en ce que** tous les tronçons (4, 8, 12) de conduite d'alimentation menant d'une unité ravitaillement pour le matériau de revêtement vers les buses de revêtement (2, 3) se présentent sous une forme rigide.

6. Dispositif selon l'une des revendications 1 ou 2, **caractérisé en ce qu'**il est prévu un tronçon (12) de conduite d'alimentation commun pour les deux buses de revêtement (2, 3), à partir duquel se dérivent deux tronçons (8) de conduite d'alimentation, sachant que l'un de ces tronçons (8) de conduite d'alimentation mène respectivement à une buse de revêtement (2, 3).

7. Dispositif selon la revendication 6, **caractérisé en ce que** le tronçon (12) de conduite d'alimentation commun et au moins un second tronçon (8) de conduite d'alimentation sont au moins partiellement identiques.

8. Dispositif selon l'une des revendications 1 ou 2, **caractérisé en ce que** le premier et le second tronçons (4, 8) de conduite d'alimentation sont reliées l'un à l'autre par une articulation rotoïde (30).

9. Dispositif selon la revendication 8, **caractérisé en ce que** la au moins une buse de revêtement (2, 3) peut être transférée de la position de travail dans la position de maintenance (A, W) par un mouvement de rotation et de la position de maintenance dans la position de travail (W, A) par un mouvement de rotation inverse, le premier tronçon (4) de conduite d'alimentation étant également mobile par rotation par rapport au second tronçon (8) de conduite d'alimentation.

10. Dispositif selon la revendication 9, **caractérisé en ce que**, les canaux d'écoulement (4a, 8a) formés dans le premier et le second tronçons (4, 8) de conduite d'alimentation pour le matériau de revêtement sont formés alignés radialement l'un par rapport à l'autre dans la position de travail (A) de la au moins une buse de revêtement (2, 3) et **en ce que**, lors du transfert de la buse de revêtement (2, 3) associée de la position de travail (A) vers la position de maintenance (W), le premier et le second tronçons (4, 8) de conduite d'alimentation sont déplacés l'un en inverse de l'autre dans la direction circonférentielle de l'articulation rotoïde (30) .

11. Dispositif selon la revendication 10, **caractérisé en ce que**, le canal d'écoulement (8a) du second tronçon (8) de conduite d'alimentation est posé radialement, de l'extérieur vers l'intérieur, dans la direction d'écoulement, vers le premier tronçon (4) de conduite d'alimentation.

12. Dispositif selon la revendication 11, **caractérisé en ce que** le canal d'écoulement (4a) dans le premier tronçon (4) de conduite d'alimentation est posé dans la direction d'écoulement radialement par rapport à l'axe de rotation (31) de l'articulation rotoïde (30) et, ensuite, dans la direction axiale, vers la buse de revêtement (2, 3).

13. Dispositif selon l'une des revendications 1 ou 2, **caractérisé en ce qu'**il est prévu un dispositif à genouillère (17), de préférence à commande manuelle et/ou à assistance pneumatique ou hydraulique, pour transférer au moins l'une des buses de revêtement (2, 3) de la position de travail (A) à la position de maintenance (W).

14. Dispositif selon l'une des revendications 1 ou 2, **caractérisé en ce que** le premier et le second tronçons (4, 8) de conduite d'alimentation sont reliées l'un à l'autre par une articulation de poussée (35 ; 40).

15. Dispositif selon la revendication 14, **caractérisé en ce qu'** au moins une buse de revêtement (2, 3) peut être transférée de la position de travail dans la position de maintenance (A, W) par un mouvement linéaire et de la position de maintenance dans la position de travail (W, A) par un mouvement linéaire inverse, le premier tronçon (4) de conduite d'alimentation étant également décalé linéairement par rapport au second tronçon (8) de conduite d'alimentation.

16. Dispositif selon la revendication 1 ou 2, **caractérisé en ce que** les deux buses de revêtement (2, 3) sont disposées l'une en face de l'autre dans leur position de travail (A) respective.

17. Dispositif selon l'une des revendications 1 ou 2, **caractérisé en ce que** les deux buses de revêtement (2, 3) peuvent être transférées en contre-sens l'une par rapport à l'autre de leur position de travail (A) respective vers leur position de maintenance (W) et inversement.

18. Procédé pour fabriquer des préimprégnés par revêtement d'une bande de matériau plat (10) contenant des fibres, en particulier en filaments de verre ou de carbone, au moyen d'un dispositif (1) selon l'une au moins des revendications 1 ou 2, dans lequel les buses de revêtement (2, 3) sont transférées d'une position de maintenance (W) dans une position de travail (A) pour appliquer un matériau de revêtement sur une bande de matériau plat (10) en défilement.
